# EUROPEAN PATENT APPLICATION

(11) **EP 4 209 730 A2**
(43) Date of publication of application: **12.07.2023**
(21) Application number: 23150352.5
(22) Date of filing: 04.01.2023
(51) Int. Cl.: F25B 49/02

(54) **CURRENT REGULATION IN AIR CONDITIONING SYSTEMS**

(30) Priority: 05.01.2022 US 202263296608 P
(71) Applicant: Carrier Corporation, Palm Beach Gardens, FL 33418 (US)
(72) Inventor: SHIN, Jaegue, Fort Lee, NJ 07024 (US); SHE, Xu, Bloomfield, CT 06002 (US); AGIRMAN, Ismail, Southington, CT 06489 (US); GINSBERG, David, Granby, CT 06035 (US); DOTSON, Thomas, East Syracuse, NY 13057 (US)
(74) Representative: Dehns

(57) **Abstract**

An air conditioning system includes a compressor including a motor, a condenser, and an evaporator; a drive including an inverter providing a multiphase, AC output voltage to the motor; a current sensor configured to sense an output current generated by the inverter; a controller configured to communicate with the current sensor and the inverter, the controller configured to provide a voltage command to the inverter, the controller configured to execute operations including: monitor the output current generated by the inverter; compare the output current to a threshold; determine the occurrence of an over current condition when the output current exceeds the threshold; when an over current condition is detected, reducing the voltage command to the inverter.

## Description

This invention pertains to the art of air conditioning systems, and more specifically, to current regulation in air conditioning systems.

Air conditioning systems have transitioned from mechanically driven components to electrically driven components. Electrically driven air conditioning systems utilize power electronics to generate electrical power suitable for various components of the air conditioning systems. Power electronics drives have inrush currents much higher than their steady-state current due to the charging current of the input capacitance when they start to operate. This inrush current can damage components or make the drive not able to operate because of the over current protection.

According to a first aspect of the invention, there is provided an air conditioning system including a compressor including a motor, a condenser, and an evaporator; a drive including an inverter providing a multiphase, AC output voltage to the motor; a current sensor configured to sense an output current generated by the inverter; a controller configured to communicate with the current sensor and the inverter, the controller configured to provide a voltage command to the inverter, the controller configured to execute operations including: monitor the output current generated by the inverter; compare the output current to a threshold; determine the occurrence of an over current condition when the output current exceeds the threshold; when an over current condition is detected, reducing the voltage command to the inverter.

Optionally, if no over current condition is detected, the controller is configured to increase the voltage command to the inverter.

Optionally, the controller is configured to increase the voltage command to the inverter in a step wise manner.

Optionally, the controller is configured to increase the voltage command to the inverter until the voltage command to the inverter reaches an upper limit.

Optionally, reducing the voltage command to the inverter comprises reducing the voltage command to the inverter by a percentage.

Optionally, reducing the voltage command to the inverter comprises reducing the voltage command to the inverter by a fixed amount.

Optionally, the voltage command to the inverter corresponds to duty cycle of a pulse width modulation (PWM) signal provided to the inverter.

According to a second aspect of the invention, there is provided a method of controlling an air conditioning system including a compressor including a motor, a condenser, an evaporator and a drive including an inverter providing a multiphase, AC output voltage to the motor, includes: monitoring an output current generated by the inverter; comparing the output current to a threshold; determining the occurrence of an over current condition when the output current exceeds the threshold; and when an over current condition is detected, reducing a voltage command to the inverter.

Optionally, the method may include increasing the voltage command to the inverter when no over current condition is detected.

Optionally, increasing the voltage command to the inverter occurs a step wise manner.

Optionally, increasing the voltage command to the inverter includes increasing the voltage command to the inverter until the voltage command to the inverter reaches an upper limit.

Optionally, reducing the voltage command to the inverter comprises reducing the voltage command to the inverter by a percentage.

Optionally, reducing the voltage command to the inverter comprises reducing the voltage command to the inverter by a fixed amount.

Optionally, the voltage command to the inverter corresponds to a duty cycle of a pulse width modulation (PWM) signal provided to the inverter.

According to a third aspect of the invention, there is provided an air conditioning system including a compressor including a motor, a condenser, and an evaporator; a drive including an inverter providing a multiphase, AC output voltage to the motor; a current sensor configured to sense an output current generated by the inverter; a controller configured to communicate with the current sensor and the inverter, the controller configured to provide a frequency command to the inverter, the controller configured to execute operations including: monitor the output current generated by the inverter; compare the output current to a threshold; determine the occurrence of an over current condition when the output current exceeds the threshold; when an over current condition is detected, reducing the frequency command to the inverter.

According to another aspect of the invention there is provided an air conditioning system as recited herein with reference to the first aspect of the invention and the third aspect of the invention. The system of the first aspect of the invention and/or the third aspect of the invention may be configured to be used in the method of the second aspect of the invention. The method of the second aspect of the invention may comprise using and/or providing the system of the first aspect of the invention and/or the third aspect of the invention. The third aspect of the invention may comprise any of the features of the first aspect of the invention.

Additional technical features and benefits are realized through the techniques of the present disclosure. Embodiments and aspects of the disclosure are described in detail herein and are considered a part of the claimed subject matter. For a better understanding, refer to the detailed description and to the drawings.

The following descriptions should not be considered limiting in any way, and are provided by way of example only. With reference to the accompanying drawings, like elements are numbered alike:
FIG. 1 is a block diagram of an air conditioning system;
FIG. 2 is a flowchart of a process of controlling current in an air conditioning system; and
FIG. 3 graphically depicts controlling current in an air conditioning system.

A detailed description of one or more embodiments of the disclosed apparatus and method are presented herein by way of exemplification and not limitation with reference to the Figures.

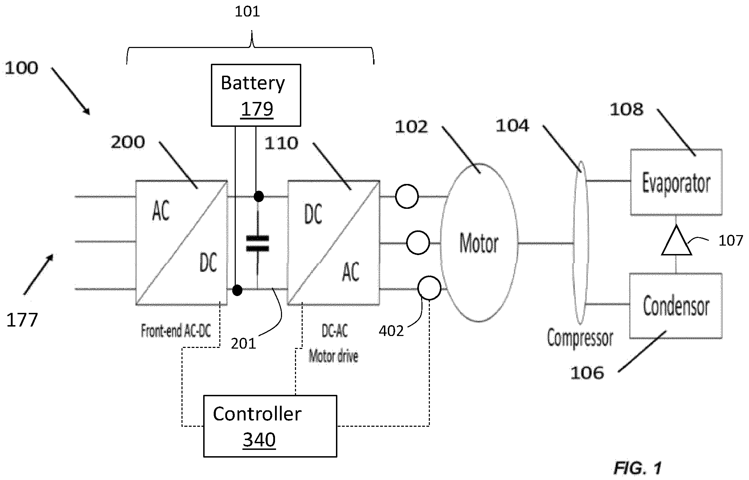

FIG. 1 is a block diagram of air conditioning system 100 in an example embodiment. The air conditioning system 100 may be configured to condition air in a building, such as a chiller, roof top unit, heat pump, etc. The air conditioning system 100 may be configured to condition air for refrigerated environments, such as a refrigerated container, a refrigerated trailer, refrigerator/freezer, etc.

The air conditioning system 100 includes a variable speed motor 102 that is coupled to a compressor 104. The compressor 104 includes an impeller/rotor that rotates and compresses liquid refrigerant to a superheated refrigerant vapor for delivery to a condenser 106. In the condenser 106, the refrigerant vapor is liquefied at high pressure and rejects heat (e.g., to the outside air via a condenser fan in an air-cooled application). The liquid refrigerant exiting condenser 106 is delivered to an evaporator 108 through an expansion valve 107. The refrigerant passes through the expansion valve 107 where a pressure drop causes the high-pressure liquid refrigerant to achieve a lower pressure combination of liquid and vapor. As fluid passes the evaporator 108, the low-pressure liquid refrigerant evaporates, absorbing heat from the fluid, thereby cooling the fluid and evaporating the refrigerant. The low-pressure refrigerant is again delivered to compressor 104 where it is compressed to a high-pressure, high temperature gas, and delivered to condenser 106 to start the refrigeration cycle again. It is to be appreciated that while a specific air conditioning system is shown in FIG. 1, the present teachings may be applicable to any air conditioning system.

As shown in FIG. 1, the compressor 104 is driven by a variable speed motor 102 coupled to a drive 101 including an alternating current (AC) - direct current (DC) converter 200 and a DC-AC inverter 110. The drive 101 is powered from one or more of an AC power source 177 and a DC power source 179. The AC power source 177 may be an engine-driven generator or an AC grid (also referred to as mains). AC input voltage from the AC power source 177 is supplied through the AC-DC converter 200. The DC power source 179 may be a battery or other charge storage device. The DC power source 179 is connected to a DC bus 201 between the AC-DC converter 200 and the DC-AC inverter 110. The motor 102 may be driven by one of the AC power source 177, the DC power source 179, or a combination of both. In addition to the motor 102, the drive 101 may power other components of the air conditioning system, such as an evaporator fan, a condenser fan, a battery charger, etc.

The AC-DC converter 200 includes solid-state electronics to convert the AC input voltage from AC power source 177 to a DC voltage across a DC bus 201. The converter 200 may be controlled by a controller 340 using controls signals. The DC-AC inverter 110 includes solid-state electronics to produce multiphase, AC output voltage. In an embodiment, DC-AC inverter 110 converts the DC voltage from the converter 200 into a multiphase, AC output voltage, at a desired frequency and/or magnitude in order to drive the multiphase motor 102. The DC-AC inverter 110 may also convert DC voltage from DC power source 179 into a multiphase, AC output voltage, at a desired frequency and/or magnitude in order to drive the multiphase motor 102. The DC-AC inverter 110 may be controlled by a controller 340 using controls signals (e.g., PWM control).

The controller 340 may be implemented using a general-purpose microprocessor executing a computer program stored on a storage medium to perform the operations described herein. Alternatively, the controller 340 may be implemented in hardware (e.g., ASIC, FPGA) or in a combination of hardware/software. The controller 340 may also be part of an air conditioning control system.

The controller 340 operates the inverter 110 to control the current supplied to the motor 102 (or other loads of the air conditioning system). One or more sensors 402 are used to monitor current supplied from the inverter 110 to the motor 102 (or other loads of the air conditioning system). The sensors 402 may be located on one phase or multiple phases of the output of the inverter 110. The sensors 402 may communicate with the controller 340 by a wired and/or wireless connection.

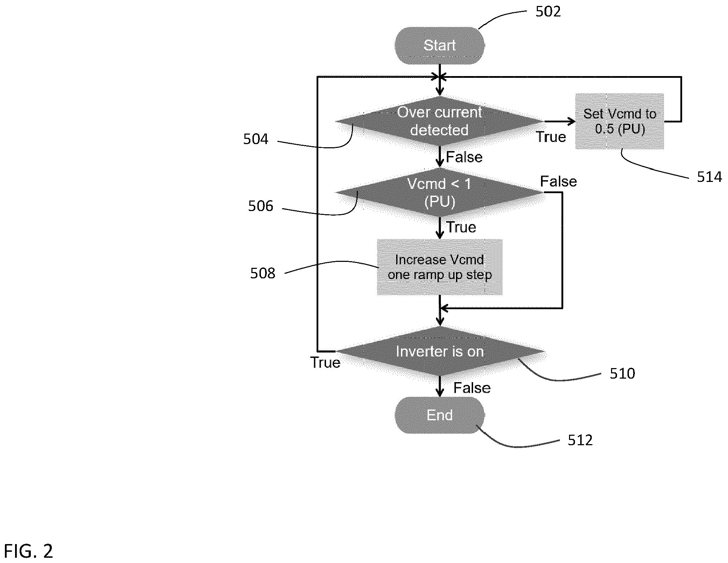

FIG. 2 is a flowchart of a process for controlling current output by the inverter 110. By controlling the current output by the inverter 110, the controller 340 can avoid the occurrence of high inrush currents that may damage power electronics in the drive 101 or cause the drive 101 to shut down due to internal protection.

The process of FIG. 2 begins at 502, when the inverter 110 is powered on. At 504, the controller 340 determines if an over current condition is detected. The controller 340 detects an over current condition by monitoring the output current of the inverter 110 using sensor(s) 402. The controller 340 compares the output current of the inverter 110 to a current threshold. If the output current is less than a current threshold, then the process flow to 506.

At 506, the controller 340 determines if a voltage command, Vcmd, is less than an upper limit. The voltage command, Vcmd, is provided from the controller 340 to the inverter 110 to regulate the output voltage of the inverter 110. The voltage command may be represented as a numerical range, for example, 0 to 1. The voltage command range of 0 to 1 may correspond to a duty cycle of 0% to 100% of pulse width modulation (PWM) signals used to control switches in the inverter 110. A voltage command of 0 corresponds to a duty cycle of 0%, and a minimum output voltage by the inverter 110. A voltage command of 1 corresponds to a duty cycle of 100%, and a maximum output voltage by the inverter 110.

As noted above, at 506, the controller 340 determines if a voltage command, Vcmd, is less than an upper limit, e.g., 1. If the voltage command, Vcmd, is less than an upper limit, flow proceeds to 508 where the controller 340 increases the voltage command, Vcmd, by a step value (for example, 0.1 or a 10% increase in duty cycle). In this manner, the controller 340 ramps up the output voltage of the inverter 110 step wise over time. At 506, if the voltage command, Vcmd, has reached the upper limit, e.g., 1, then flow proceeds to 510.

At 510, the controller 340 confirms that the inverter 110 is still on. If the inverter is not on at 510, then the process ends at 512, and restarts when the inverter 110 is turned on again. If at 510, the inverter 510 is on, flow returns to 504, where the controller 340 determines if an over current condition is detected. If the output current of the inverter 110 is greater than the current threshold, an over current condition is detected at 504, and flow proceeds to 514 where the controller 340 reduces the voltage command, Vcmd. The voltage command, Vcmd, may be reduced by a percentage of a current value, for example, 0.5 times the current voltage command, as show in 514. In other embodiments, the voltage command, Vcmd, may be reduced by a fixed amount, for example, 0.3 or 30% duty cycle reduction.

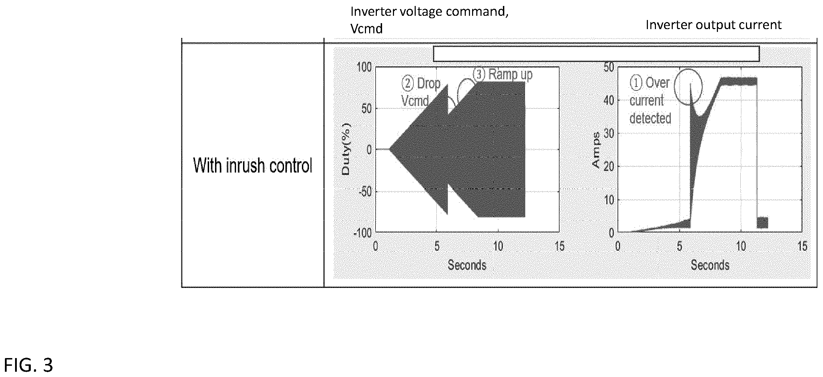

FIG. 3 illustrates an example of the process of FIG. 2. FIG. 3 depicts the inverter voltage command, Vcmd, versus time and the inverter output current versus time. The inverter voltage command, Vcmd, increases from 0% to 75% over 6 seconds. At the 6 second time, an over current condition occurs as shown at 1 in FIG. 3. In response to the over current condition, the controller 340 reduces the inverter voltage command, Vcmd, from 75% to 37.5%, as shown at 2 of FIG. 3. The controller 340 then increases the inverter voltage command, Vcmd, in a step wise manner as shown at 3 in FIG. 3.

In another embodiment, the controller 340 controls a frequency of the output of the inverter 110 when an over current condition is detected. Control of the frequency of the output of the inverter 110 operates in a similar manner as the process shown in Figure 2. Instead of adjusting the voltage command, Vcmd, the controller 340 adjusts a frequency command, Fcmd, which controls the frequency of the output of the inverter 110. Similar to the process in FIG. 2, the frequency command, Fcmd, may be reduced at 514 (in response to an over current condition) and then increased in a step wise manner until an upper limit is reached. In other embodiments, both the voltage command, Vcmd, and the frequency command, Fcmd, are controlled in accordance with the process in FIG. 2.

Embodiments of this disclosure provide an inrush current handling method to decrease the peak current of the inrush current. This allows the drive to run through the inrush current without triggering a shutdown or damage to devices in the drive.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. An air conditioning system comprising:
a compressor (104) including a motor (102), a condenser (106), and an evaporator (108);
a drive (101) including an inverter (110) providing a multiphase, AC output voltage to the motor (102);
a current sensor (402) configured to sense an output current generated by the inverter (110);
a controller (340) configured to communicate with the current sensor (402) and the inverter (110), the controller (340) configured to provide a voltage command to the inverter (110), the controller (340) configured to execute operations including:
monitor the output current generated by the inverter (110);
compare the output current to a threshold;
determine the occurrence of an over current condition when the output current exceeds the threshold;
when an over current condition is detected, reducing the voltage command to the inverter (110).

2. The air conditioning system of claim 1, wherein if no over current condition is detected, the controller (340) is configured to increase the voltage command to the inverter (110).

3. The air conditioning system of claim 2, wherein the controller (340) is configured to increase the voltage command to the inverter (110) in a step wise manner.

4. The air conditioning system of claim 2 or 3, wherein the controller (340) is configured to increase the voltage command to the inverter (110) until the voltage command to the inverter (110) reaches an upper limit.

5. The air conditioning system of any preceding claim, wherein reducing the voltage command to the inverter (110) comprises reducing the voltage command to the inverter (110) by a percentage.

6. The air conditioning system of any preceding claim, wherein reducing the voltage command to the inverter (110) comprises reducing the voltage command to the inverter (110) by a fixed amount.

7. The air conditioning system of any preceding claim, wherein the voltage command to the inverter (110) corresponds to duty cycle of a pulse width modulation (PWM) signal provided to the inverter (110).

8. A method of controlling an air conditioning system including a compressor (104) including a motor (102), a condenser (106), an evaporator (108) and a drive (101) including an inverter (110) providing a multiphase, AC output voltage to the motor (102), the method comprising:
monitoring an output current generated by the inverter (110);
comparing the output current to a threshold;
determining the occurrence of an over current condition when the output current exceeds the threshold; and
when an over current condition is detected, reducing a voltage command to the inverter (110).

9. The method of claim 8, further comprising increasing the voltage command to the inverter (110) when no over current condition is detected.

10. The method of claim 9, wherein increasing the voltage command to the inverter (110) occurs a step wise manner.

11. The method of claim 9 or 10, wherein the increasing the voltage command to the inverter (110) includes increasing the voltage command to the inverter (110) until the voltage command to the inverter (110) reaches an upper limit.

12. The method of any of claims 8 to 11, wherein reducing the voltage command to the inverter (110) comprises reducing the voltage command to the inverter (110) by a percentage.

13. The method of any of claims 8 to 12, wherein reducing the voltage command to the inverter (110) comprises reducing the voltage command to the inverter (110) by a fixed amount.

14. The method of any of claims 8 to 13, wherein the voltage command to the inverter (110) corresponds to a duty cycle of a pulse width modulation (PWM) signal provided to the inverter (110).

15. An air conditioning system comprising:
a compressor (104) including a motor (102), a condenser (106), and an evaporator (108);
a drive (101) including an inverter (110) providing a multiphase, AC output voltage to the motor (102);
a current sensor (402) configured to sense an output current generated by the inverter (110);
a controller (340) configured to communicate with the current sensor (402) and the inverter (110), the controller (340) configured to provide a frequency command to the inverter (110), the controller (340) configured to execute operations including:
monitor the output current generated by the inverter (110);
compare the output current to a threshold;
determine the occurrence of an over current condition when the output current exceeds the threshold;
when an over current condition is detected, reducing the frequency command to the inverter (110).
